# EUROPEAN PATENT APPLICATION

(11) **EP 2 105 889 A2**
(43) Date of publication of application: **30.09.2009**
(21) Application number: 08251577.6
(22) Date of filing: 30.04.2008
(51) Int. Cl.: G07C 11/00

(54) **Systems and methods for transaction queue analysis**

(30) Priority: 28.03.2008 US 57476
(71) Applicant: Verint Systems Inc., Santa Clara, CA 95054 (US)
(72) Inventor: Johnson, Alexander Steven, Erie, Colorado 80516 (US)
(74) Representative: Bibby, William Mark

(57) **Abstract**

A method and system for determining a wait time for a transaction queue is disclosed. In the method, video data related to a first transaction queue is received. The video data is processed to determine a number of items presented by a first entity for a transaction in the first transaction queue. A total transaction time is estimated for the first entity based on the number of items presented by the first entity and a transaction time for each of the number of items. A wait time for the first transaction queue is determined based on the estimated total transaction time for the first entity. If the wait time for the first transaction queue is greater than a first threshold, then the availability of a second transaction queue is indicated to a second entity.

## Description

### TECHNICAL FIELD

The field of the disclosure relates to video analytics, and in particular, to systems and methods for transaction queue analysis.

### TECHNICAL BACKGROUND

Due to their wide availability and affordability, video camera systems are employed in many modem contexts. Such systems are often used to capture news and sporting events, provide a reliable record for law enforcement, or even record personal achievements and family get-togethers. In addition, many commercial and industrial organizations employ video cameras in a wide variety of applications.

Some existing video systems are employed in supermarkets and other retail establishments. Many of these retail establishments contain a checkout area where customers wait in line to make a purchase. If the checkout lines are too long, some customers may get angry while others may even leave the store without making a purchase. In some instances, a customer might be unaware that there is a shorter checkout line available. In other instances, store employees may be unaware that a new checkout line should be opened so that customers do not experience an unreasonably long wait.

### OVERVIEW

A method of determining a wait time for a transaction queue is disclosed. In the method, video data related to a first transaction queue is received. The video data is processed to determine a number of items presented by a first entity for a transaction in the first transaction queue. A total transaction time is estimated for the first entity based on the number of items presented by the first entity and a transaction time for each of the number of items. A wait time for the first transaction queue is determined based on the estimated total transaction time for the first entity. If the wait time for the first transaction queue is greater than a first threshold, then the availability of a second transaction queue is indicated to a second entity.

Also disclosed is a system for determining a wait time for a transaction queue. The system includes an interface configured to receive video data related to a first transaction queue and a processor configured to determine a number of items presented by a first entity for a transaction in the first transaction queue. The processor is also configured to estimate a total transaction time for the first entity based on the number of items presented by the first entity and a transaction time for each of the number of items. The processor is further configured to determine a wait time for the first transaction queue based on the estimated total transaction time for the first entity. If the wait time for the first transaction queue is greater than a first threshold, then the processor indicates an availability of a second transaction queue to a second entity.

In one embodiment, the wait time for the first transaction queue is determined by estimating a total transaction time for a third entity in the first transaction queue. The wait time for the first transaction queue may also be based on the number of entities in the first transaction queue.

In one implementation, the interface receives radio frequency identification data related to the first transaction queue, wherein the radio frequency identification data includes an identity of at least one of the items presented by the first entity.

In one example, if the wait time for the first transaction queue is greater than the first threshold, then the processor generates an alert. The threshold may be based on a predetermined length of time, a number of items, or a wait time for the second transaction queue.

In one embodiment, the transaction time for each of the number of items is a predetermined length of time. The transaction time may depend on a characteristic of each item.

In one implementation, the system determines a wait time for multiple transaction queues.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, there is no intent to limit the disclosure to the embodiments disclosed herein. On the contrary, the intent is to cover all alternatives, modifications, and equivalents.

Figure 1 is a flow diagram that illustrates a method according to an embodiment of the invention for determining a wait time for a transaction queue;

Figure 2 is a block diagram that illustrates a system according to an embodiment of the invention for determining a wait time for a customer queue;

Figure 3 is a block diagram that illustrates a system according to another embodiment of the invention for determining a wait time for a customer queue;

Figure 4A is a flow diagram that illustrates a method according to another embodiment of the invention for determining a wait time for a customer queue employing the system of Figure 3;

Figure 4B is a flow diagram that illustrates a method according to another embodiment of the invention for determining a wait time for a customer queue;

Figure 5 is a block diagram that illustrates a system according to another embodiment of the invention for determining a wait time for a customer queue;

Figure 6 is a flow diagram that illustrates a method according to another embodiment of the invention for determining a wait time for a customer queue employing the system of Figure 5; and

Figure 7 is a block diagram that illustrates a computer system employed in an embodiment of the invention.

### DETAILED DESCRIPTION

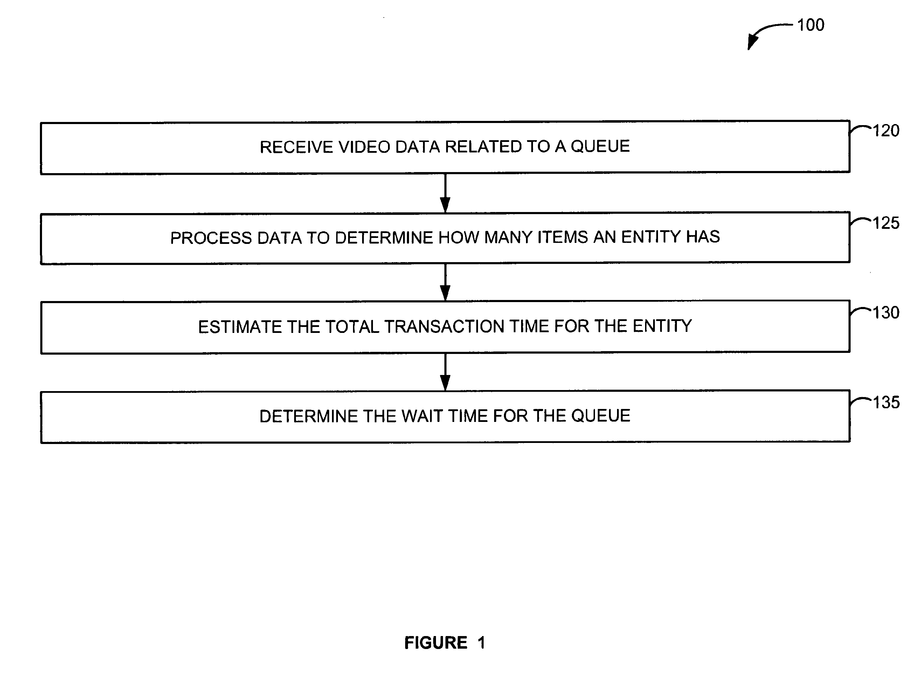

Figures 1-7 and the following description depict specific embodiments of the invention to teach those skilled in the art how to make and use the best mode of the invention. For the purpose of teaching inventive principles, some conventional aspects have been simplified or omitted. Those skilled in the art will appreciate variations from these embodiments that fall within the scope of the invention. Those skilled in the art will also appreciate that the features described below can be combined in various ways to form multiple embodiments of the invention. As a result, the invention is not limited to the specific embodiments described below, but only by the claims and their equivalents.

Figure 1 provides a flow diagram of method 100 that determines a wait time for a transaction queue. A transaction queue could be a checkout line, a customer queue, a return line, a service line, or any other environment where an entity experiences a wait time. In method 100, video data related to a transaction queue is received (operation 120). In one example, the video data includes frames of a video stream that represent a series of images. The series of images constitutes a moving video image. Further, the video data may provide a view of a transaction queue, a checkout queue, a customer queue, a return queue, a service queue, or some other queue for a transaction.

The video data is processed to determine how many items an entity in the queue has for a transaction (operation 125). An entity could be a shopper, a customer, an individual, a group of individuals, a vehicle, or anything that may present an item for a transaction. The items for the transaction may be in a shopping cart, a handheld basket, carried by the entity, in a vehicle, or in any other form of transport.

A total transaction time is estimated for the entity based on the number of items for the transaction and an estimated transaction time for each item (operation 130). The estimated transaction time for each item may be a predetermined length of time or a length of time based on one or more particular characteristics of each item. For example, a large or heavy item, such as a television, may have a longer transaction time than a small or light item, such as a pack of gum. Thus, in some embodiments, the estimated transaction time for a television is longer than the estimated transaction time for a pack of gum. The total transaction time for the entity may also include a processing time for the entity. The processing time is the time typically required for the entity to perform certain actions associated with the transaction. The processing time could include the time to make a payment and complete a checkout process, the time to process a credit card, the time to process a payment by check, the time to check the identification of the entity, or any other action associated with the transaction.

A total wait time for the transaction queue is determined based on the estimated total transaction time for the entity (operation 135). In some embodiments, the total wait time for the transaction queue is based on the sum of the estimated total transaction times for a plurality of entities in the queue.

While Figure 1, as well as other flow diagrams presented herein, may indicate a particular order of execution, other orders of execution, including concurrent or simultaneous execution, may be possible while remaining within the scope of the invention.

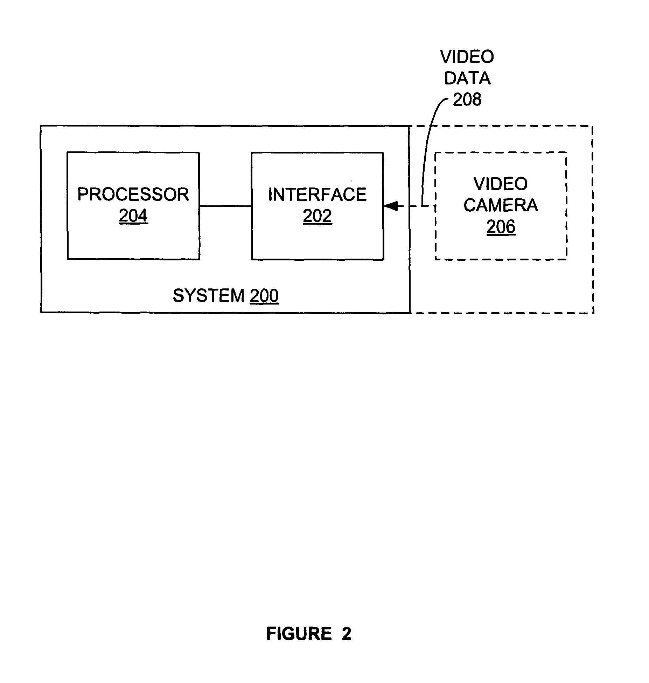

Figure 2 presents a block diagram of system 200 that determines a wait time for a transaction queue. System 200 includes interface 202 configured to receive video data 208, possibly from video camera 206. System 200 also includes processor 204 configured to perform the operations depicted in Figure 1 using received video data 208. In one implementation, system 200 may incorporate or include video camera 206.

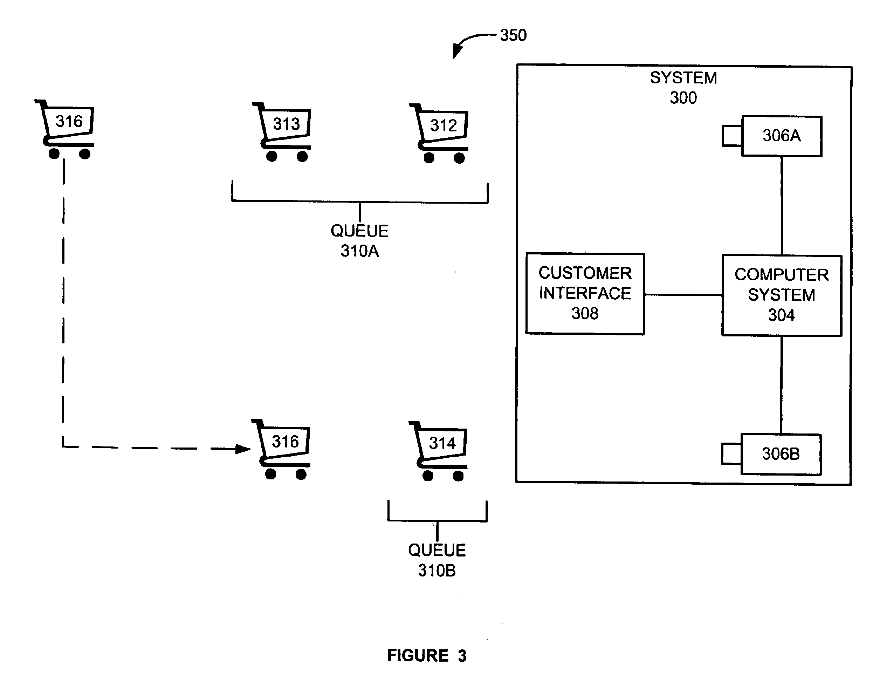

Figure 3 presents a block diagram of system 300 that determines a wait time for a customer queue. System 300 operates in environment 350. Environment 350 includes system 300, queues 310A and 310B, queued customers 312-314, and arriving customer 316. System 300 includes computer system 304, video cameras 306A and 306B, and customer interface 308. Computer system 304 communicates with video cameras 306A and 306B and customer interface 308.

Computer system 304 is similar to system 200 in Figure 2. Video cameras 306A and 306B comprise any device that captures video data and transmits the video data to computer system 304. Customer interface 308 includes an audible or visual signal that is discernible by queued customers 312-314 and arriving customer 316. For example, customer interface 308 may be a video display, a light-emitting diode (LED) array, a public address system, or other similar device. Queues 310A and 310B comprise customer checkout lines. Queued customers 312-314 comprise customers waiting in queues 310A and 310B with a number of items for purchase. Arriving customer 316 comprises a customer with a number of items for purchase who has just arrived in the checkout area near queue 310A. The dotted line represents the movement of customer 316 to queue 310B.

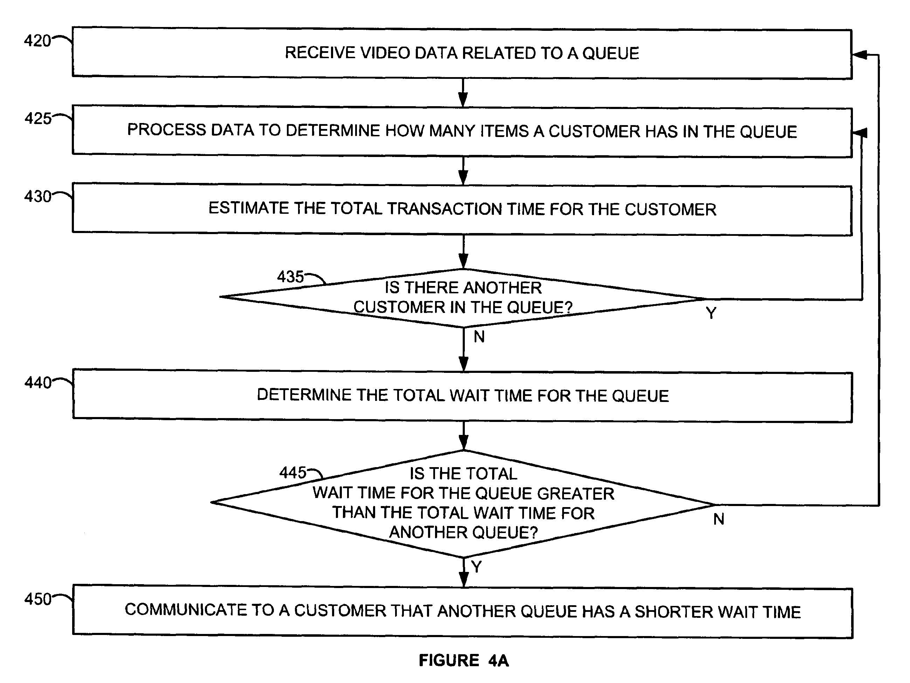

Figure 4A is flow diagram that illustrates the operation of system 300 in environment 350. Video camera 306A captures video data related to queue 310A. Computer system 304 receives the video data from video camera 306A (operation 420). Computer system 304 processes the video data from camera 306A using video analytics to determine how many items queued customer 312 has for checkout (operation 425). Based on the items that queued customer 312 has for checkout, computer system 304 estimates the total checkout time for customer 312 (operation 430). Computer system 304 then processes the video data using video analytics to determine whether or not there is another customer in queue 310A (operation 435).

In Figure 3, there is another customer in queue 310A, queued customer 313. Computer system 304 then determines the number of items that queued customer 313 has for checkout (operation 425). Computer system 304 estimates the total checkout time for queued customer 313 (operation 430). Next, computer system 304 processes the video data further to determine whether another customer is located in queue 310A (operation 435). Since arriving customer 316 has not yet entered queue 310A, customer 316 is not counted as part of queue 310A.

In response to determining that there are no additional queued customers in queue 310A, computer system 304 determines the total wait time for queue 310A (operation 440). The total wait time for queue 310A may be determined by summing the total checkout time for customers 312 and 313.

While video camera 306A and computer system 304 are performing operations 420-440 on queue 310A, video camera 306B and computer system 304 are simultaneously performing operations 420-440 on queue 310B. In one embodiment, a plurality of video cameras working in conjunction with computer system 304 determine the total wait times for a plurality of customer queues. In another implementation, one video camera may capture video data for a plurality of customer queues.

Returning to Figure 4A, after computer system 304 has determined the total wait time for queues 310A and 310B, computer system 304 determines which of queues 310A and 310B has a shorter wait time (operation 445). If queue 310B has a shorter wait time than queue 310A, then computer system 304 directs customer interface 308 to indicate to arriving customer 316 that queue 310B has a shorter wait time (operation 450).

Referring to Figure 3 in one example, queued customer 312 in queue 310A has fourteen items for checkout, queued customer 313 in queue 310A has ten items for checkout, and queued customer 314 in queue 310B has five items for checkout. If the transaction time per item is ten seconds and the processing time per customer is forty-five seconds, then the total wait time for queue 310A is three hundred and thirty seconds, and the total wait time for queue 310B is ninety-five seconds. Thus, computer system 304 would indicate to arriving customer 316 that queue 310B has a shorter wait time.

Referring to Figure 3 in another example, queued customer 312 in queue 310A has five items for checkout, queued customer 313 in queue 310A has five items for checkout, and queued customer 314 in queue 310B has twenty items for checkout. If the transaction time per item is ten seconds and the processing time per customer is forty-five seconds, then the total wait time for queue 310A is one hundred and ninety seconds, while the total wait time for queue 310B is two hundred and forty-five seconds. Thus, computer system 304 would not indicate to arriving customer 316 that queue 310B has a shorter wait time.

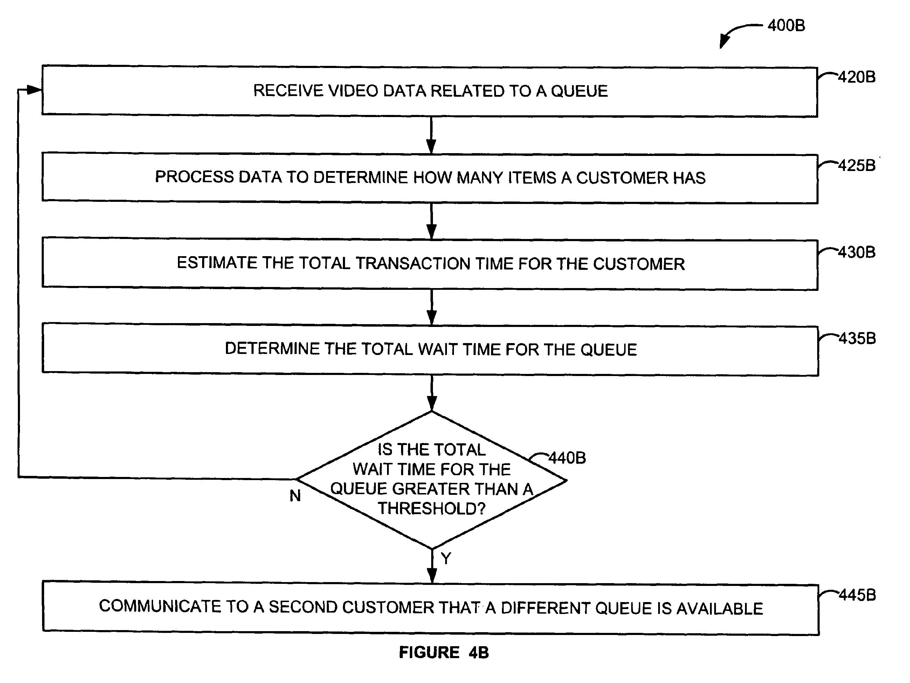

Figure 4B provides a flow diagram of method 400B that determines a wait time for a customer queue. In method 400B, video data related to a queue is received (operation 420B). In one example, the video data includes frames of a video stream that represent a series of images. The series of images constitutes a moving video image. Further, the video data may provide a view of a customer checkout queue, a customer return queue, or some other customer queue for a customer transaction.

The video data is processed to determine how many items a customer in the queue has for checkout (operation 425B). The items for checkout may be in a shopping cart, a handheld basket, or simply carried by the customer.

A total transaction time is estimated for the customer based on the number of items for checkout and an estimated transaction time for each item (operation 430B). The estimated transaction time for each item may be a predetermined length of time or a length of time based on one or more particular characteristics of each item. For example, a large or heavy item, such as a television, may take longer to checkout than a small or light item, such as a pack of gum. Thus, in some embodiments, the estimated transaction time for a television is longer than the estimated transaction time for a pack of gum. The total transaction time for the customer may also include a processing time for the customer. The processing time is the time typically required for the customer to make a payment and complete the checkout process.

A total wait time for the queue is determined based on the estimated total transaction time for the customer (operation 435B). In some embodiments, the total wait time for the queue is based on the sum of the estimated total transaction times for a plurality of customers in the queue.

If the total wait time for the queue is greater than a threshold (operation 440B), then a second customer is informed that a different queue is available (operation 445B). The threshold may be a predetermined length of time or a wait time for a different customer queue. If the total wait time for the queue is less than the threshold (operation 440B), then method 400B restarts at operation 420B.

In one implementation, a plurality of video cameras capture video data related to a single queue. For example, a single queue might have a video camera that captures video data from the left side of the queue, a second video camera that captures video data from the right side of the queue, and a third video camera that captures video data from above the queue. Multiple video cameras may be used to capture video data when a shopping cart contains more than one layer of items for checkout (i.e. items are stacked on top of one another inside the shopping cart). Multiple video cameras may be used to capture video data from different angles in order to isolate and identify each item inside the shopping cart.

In one example, one or more video cameras may be used to capture video data related to items on a conveyor belt, a tabletop, a flatbed, a checkout counter, or any other location where items are transported or presented for a transaction.

In one example, one or more video cameras may be used to capture video data related to a person moving through the store. The system could track an individual shopper through the store and capture video data related to items placed in the shopper's cart and items taken out of the shopper's cart. In this example, when the shopper enters the checkout area, the system already knows how many and what kinds of items the shopper has for the transaction.

In one implementation, video data related to a queue is analyzed to determine an aggregate size of a plurality of items in a shopping cart. A computer system then estimates a total checkout time for a queued customer based on the aggregate size of the plurality of items in the shopping cart. For example, if the aggregate size of the plurality of items in the shopping cart of a queued customer is six square feet, the estimated transaction time per square foot is forty seconds, and the estimated processing time per customer is forty-five seconds, then the computer system estimates that the total checkout time for the queued customer is two hundred and eighty-five seconds.

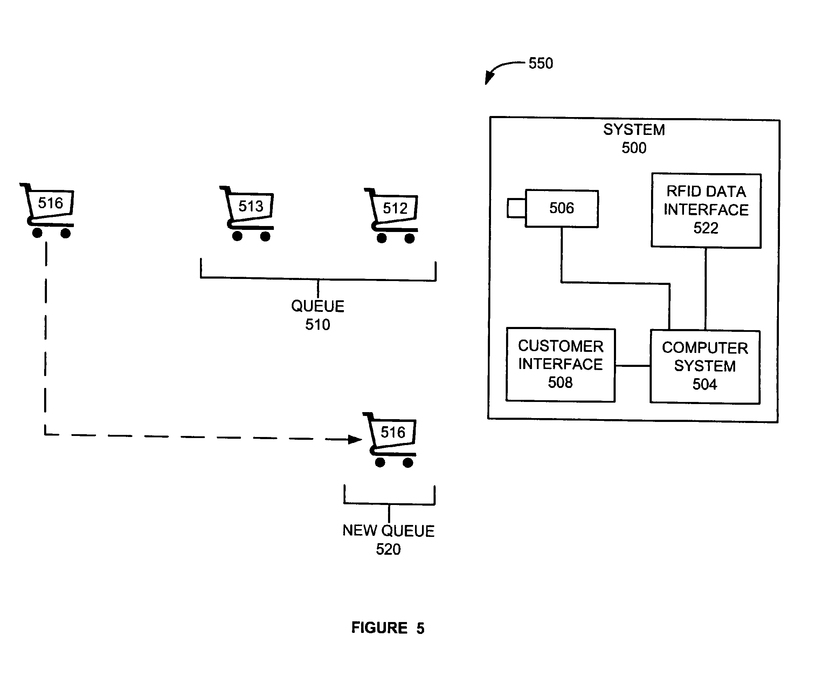

Figure 5 presents a block diagram of system 500 that determines a wait time for a customer queue. System 500 operates within environment 550. Environment 550 includes system 500, queue 510, new queue 520, queued customers 512 and 513, and arriving customer 516. System 500 includes computer system 504, video camera 506, customer interface 508, and Radio Frequency Identification (RFID) data interface 522. Computer system 504 communicates with video camera 506, customer interface 508, and RFID data interface 522.

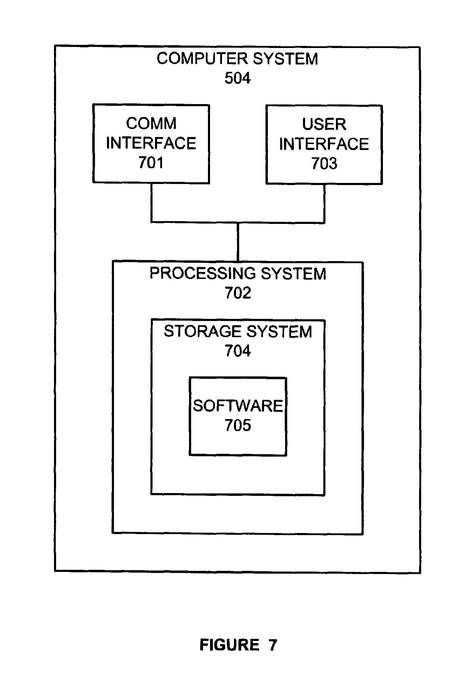

One example of computer system 504 is demonstrated in Figure 7 and described in greater detail below. Video camera 506 includes any device that captures video data and transmits the video data to computer system 504. Customer interface 508 includes an audible or visual signal that is discernible by queued customers 512 and 513 and arriving customer 516. RFID data interface 522 may be an RFID reader, or any device capable of reading an RFID tag. Queue 510 and new queue 520 comprise customer checkout lines. Queued customers 512 and 513 comprise customers waiting in queue 510 with a number of items for purchase. Arriving customer 516 includes a customer with a number of items for purchase who has just arrived in the checkout area near queue 510. The dotted line represents the movement of customer 516 to new queue 520.

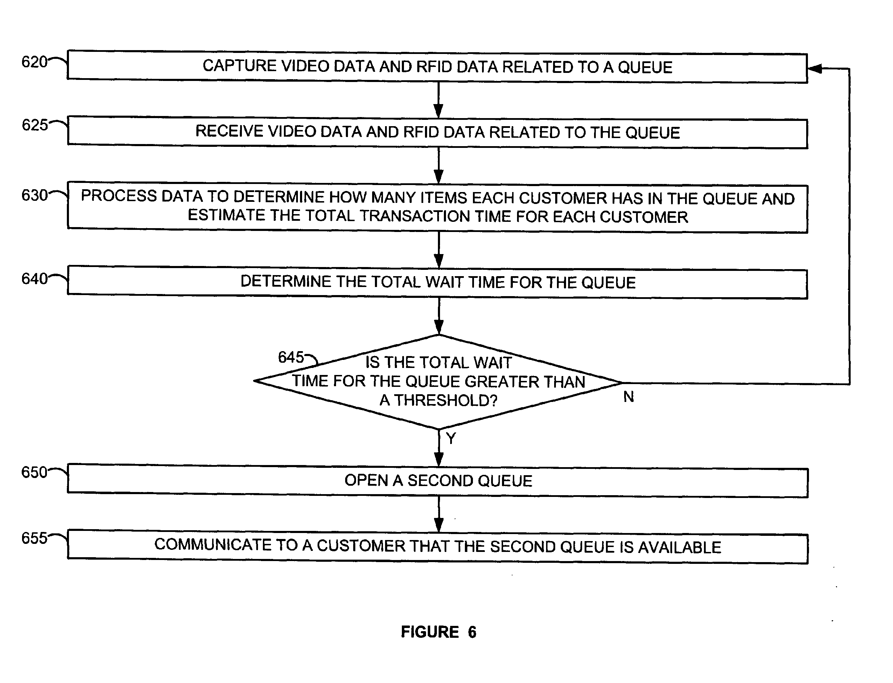

Figure 6 is flow diagram that illustrates the operation of system 500 in environment 550 in one implementation. At the beginning of the process in Figure 6, only queue 510 is operating and new queue 520 is not yet open for customers. Video camera 506 captures video data and Radio Frequency Identification Data (RFID) related to queue 510 (operation 620). In addition, the RFID data interface may capture data related to the queue 510. For example, the RFID data may include data indicating the identity of one or more items being carried by customers 512 and 513 in queue 510. Computer system 504 receives the video data and RFID data (operation 625). Computer system 504 then processes the video data and RFID data to determine how many items queued customer 512 has for checkout and to estimate the total transaction time for queued customer 512 (operation 630). The estimate of the total transaction time may be based in part on the identity of the items as reported in the RFID data. Computer system 503 repeats operation 630 for each queued customer in queue 510.

In response to estimating the total transaction time for each customer in queue 510, computer system 504 determines the total wait time for the queue based on the items for checkout in queue 510 and the number of customers in queue 510 (operation 640). If the total wait time for queue 510 is greater than a predetermined threshold (operation 645), then computer system 504 recommends that a second queue be opened for customer transactions. In one embodiment, computer system 504 alerts management or an employee that another queue should be opened. In another embodiment, if the queue is an automated self-checkout station, then computer system 504 automatically opens new queue 520.

In Figure 5, new queue 520 is opened because the total wait time for queue 510 is greater than the predetermined threshold (operation 650). Once new queue 520 is open, computer system 504 drives customer interface 508 to inform arriving customer 516 that new queue 520 is available (operation 655).

In one example, the predetermined threshold is five minutes, or three hundred seconds. Queued customer 512 has fourteen items for checkout and queued customer 513 has twelve items for checkout. If the transaction time per item is ten seconds and the processing time per customer is forty-five seconds, then the total wait time for queue 510 is three hundred and fifty seconds. Since the wait time for queue 510 exceeds the predetermined threshold, new queue 520 is opened for customer transactions and arriving customer 516 is informed of the availability of new queue 520.

In one implementation, the system tracks queue statistics and generates corresponding reports. For example, store management could request a report on average queue wait times on different days of a week or month, or at different times of a day.

Figure 7 illustrates a block diagram of computer system 504 in one embodiment. Computer system 504 includes communication interface 701, processing system 702, and user interface 703. Processing system 702 includes storage system 704. Storage system 704 stores software 705. Processing system 702 is linked to communication interface 701 and user interface 703. Computer system 504 could be comprised of a programmed general-purpose computer, although those skilled in the art will appreciate that programmable or special purpose circuitry and equipment may be used. Computer system 504 may be distributed among multiple components that together comprise elements 701-705.

Communication interface 701 includes a network interface, modem, port, transceiver, or some other communication device. Communication interface 701 may be distributed among multiple communication components. Processing system 702 includes, in addition to storage system 704, a computer microprocessor, logic circuit, or some other processing device. Processing system 702 may be distributed among multiple processing components. User interface 703 includes a keyboard, mouse, voice recognition interface, microphone and speakers, graphical display, touch screen, or some other type of user device. User interface 703 may be distributed among multiple user components. Storage system 704 includes a disk, tape, integrated circuit, server, or some other memory device. Storage system 704 may be distributed among multiple memory components.

Processing system 702 retrieves and executes software 705 from storage system 704. Software 705 includes an operating system, utilities, drivers, networking software, and other software typically loaded onto a computer system. Software 705 includes an application program, firmware, or some other form of machine-readable processing instructions. When executed by processing system 702, software 705 directs processing system 702 to operate as described herein.

Various embodiments of the invention discussed herein provide a method and system of determining the wait time for a customer queue, as captured on a video, that may account for variations in the wait time associated with each customer without requiring constant human monitoring and visual analysis. Further, the method and system are adaptable to a wide range of applications and environments due to their programmability with respect to changeable thresholds and programmable time periods for defining a transaction time for an item. Any environment in which more than one queue of people may be provided, and in which variations in the processing or transaction time associated with each person of the queue are possible, may benefit from the application of the principles described herein. In one implementation, an airline ticket counter providing a number of queues, each of which holds a number of travelers carrying differing numbers of baggage items of varying sizes and weights, may be analyzed in the manner described herein.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. A method for determining a wait time for a transaction queue using video analytics, the method comprising:
receiving video data related to a first transaction queue;
the method **characterized by**:
processing the data to determine a number of items presented by a first entity for a transaction in the first transaction queue;
estimating a total transaction time for the first entity based on the number of items presented by the first entity and a transaction time for each of the number of items; and
determining a wait time for the first transaction queue based on the estimated total transaction time for the first entity.

2. The method of claim 1, wherein determining the wait time for the first transaction queue further comprises estimating a total transaction time for a second entity in the first transaction queue.

3. The method of claim 1, further **characterized by** receiving radio frequency identification data related to the first transaction queue, wherein the radio frequency identification data comprises an identity of at least one of the number of items presented by the first entity.

4. The method of claim 1, further **characterized by**, if the wait time for the first transaction queue is greater than a first threshold, then generating an alert.

5. The method of claim 1, wherein the transaction time for each of the number of items comprises a predetermined length of time.

6. The method of claim 1, wherein the transaction time for each of the number of items depends on a characteristic of each item.

7. The method of claim 6, wherein the characteristic comprises at least one of a size of each item and a weight of each item.

8. The method of claim 1, wherein determining the wait time for the first transaction queue further comprises determining a number of entities in the first transaction queue.

9. The method of claim 1, wherein if the wait time for the first transaction queue is greater than a first threshold, then indicating an availability of a second transaction queue to a third entity.

10. The method of claim 9, wherein the first threshold comprises a predetermined length of time, a number of items, or a wait time for the second transaction queue.

11. A system for determining a wait time for a transaction queue using video analytics, the system comprising:
an interface (202) configured to receive video data related to a first transaction queue;
the system further **characterized by**:
a processor configured (204) to determine a number of items presented by a first entity for a transaction in the first transaction queue, estimate a total transaction time for the first entity based on the number of items presented by the first entity and a transaction time for each of the number of items, and determine a wait time for the first transaction queue based on the estimated total transaction time for the first entity.

12. The system of claim 11, wherein, to determine the wait time for the first transaction queue, the processor is configured to estimate a total transaction time for a second entity in the first transaction queue.

13. The system of claim 11, wherein the interface is further configured to receive radio frequency identification data related to the first transaction queue wherein the radio frequency identification data comprises an identity of at least one of the number of items presented by the first entity.

14. The system of claim 11, wherein, if the wait time for the first transaction queue is greater than a first threshold, then the processor is configured to generate an alert.

15. The system of claim 11, further comprising:
if the wait time for the first transaction queue is greater than a first threshold, then indicate an availability of a second transaction queue to a third entity.
